Europäisches Patentamt

European Patent Office

Office européen des brevets

(11) Publication number: **0 601 655 A1**

# EUROPEAN PATENT APPLICATION

(21) Application number: **93203401.0**

(22) Date of filing: **03.12.93**

(51) Int. Cl.5: **H04N 5/21**

(30) Priority: **10.12.92 EP 92203860**
**15.01.93 EP 93200098**

(43) Date of publication of application:
**15.06.94 Bulletin 94/24**

(84) Designated Contracting States:
**DE FR GB IT**

(71) Applicant: **PHILIPS ELECTRONICS N.V.**
**Groenewoudseweg 1**
**NL-5621 BA Eindhoven(NL)**

(72) Inventor: **De Haan, Gerard**
**c/o INT. OCTROOIBUREAU B.V.,**
**Prof. Holstlaan 6**
**NL-5656 AA Eindhoven(NL)**
Inventor: **Biezen, Paul Willem Albert Cornelis**
**c/o INT. OCTROOIBUREAU B.V.,**
**Prof. Holstlaan 6**
**NL-5656 AA Eindhoven(NL)**
Inventor: **Ojo, Olukayode Anthony**
**c/o INT. OCTROOIBUREAU B.V.,**
**Prof. Holstlaan 6**
**NL-5656 AA Eindhoven(NL)**
Inventor: **Kwaaitaal-Spassova, Tatiana**
**Georgieva**
**c/o INT. OCTROOIBUREAU B.V.,**
**Prof. Holstlaan 6**
**NL-5656 AA Eindhoven(NL)**

(74) Representative: **Steenbeek, Leonardus**
**Johannes et al**
**INTERNATIONAAL OCTROOIBUREAU B.V.,**
**Prof. Holstlaan 6**
**NL-5656 AA Eindhoven (NL)**

(54) **Noise reduction filter.**

(57) In a noise reduction filter comprising a weighted average filter (1A) coupled to receive a plurality of input signal samples (O,⊕) and furnishing noise-reduced signal samples, and a delay circuit (3A) which is coupled to an output of the weighted average filter (1A) and which furnishes a plurality of delayed noise-reduced signal samples (X) to a further input of the weighted average filter (1A), weighting coefficients assigned to samples of said input signal (O) and said delayed signal (X) depend on respective differences between a current sample (⊕) of said input signal on the one hand and said samples of said input signal (O) and said delayed signal (X) on the other hand.

FIG.1A

EP 0 601 655 A1

The invention relates to a noise reduction filter, more particularly to a filter for image data noise reduction. The invention also relates to a noise reduction filtering method and to an image signal receiver comprising a noise reduction filter.

Noise reduction of image data is generally realized through averaging of likely correlated picture elements. The likelihood may be due to spatial or temporal proximity. Both linear and non-linear filters have been used for noise reduction purposes, as well as the intermediate solution of adapting filter coefficients to local picture statistics.

The article "Extended-Order Statistic Filter and Evaluation of Noise Reduction Performance", Electronics and Communications in Japan, Part 3, Vol. 74, No. 5, 1991, pp. 1-11, discloses an extended-order statistic filter for image data noise reduction. The distinction between order statistic filters (OSF) and linear filters is that in an OSF, weighting coefficients are not related to the spatial or temporal distance with respect to the current sample, but to the order of the samples after ranking them on the basis of their signal value. In the extended-order statistic filter described in the article, the coefficients not only depend on the order of the signal values, but also on the order of differences between the signal values of neighboring samples and the signal value of the current sample (differential OSF), and further on the distance to the current sample. It was shown that this type of filter can combine the advantages of linear and non-linear filtering on gaussian noise and impulse noise, respectively. The transversal nature of these filters makes them rather expensive when applied to profit from the temporal correlation in image sequences.

It is, *inter alia*, an object of the invention to provide a filter which is more cost-effective. For this purpose, a first aspect of the invention provides a noise reduction filter as defined in claim 1. A second aspect of the invention provides an image signal receiver as defined in claim 12. A third aspect of the invention provides a noise reduction filtering method as defined in claim 13. Advantageous embodiments of the invention are defined in the subclaims.

The noise reduction filter defined in claim 1 shows an improved hardware efficiency when compared to the filter described in the above-mentioned article, since no ranking of the filter input samples or of differences between filter input samples and a current sample is required. One of the recognitions underlying the present invention is that in an OSF, the ranking of the input samples and thus the weighting coefficients assigned to these input samples, may result in high weighting coefficients assigned to samples showing a large difference with regard to the current sample just because there were no samples showing a smaller difference with regard to the current sample. The recursive-transversal weighted average filter in accordance with the present invention, in which the weighting coefficients depend on the differences between a current input sample and neighboring samples, does not show this disadvantage. Experiments have shown that an attractive price/performance ratio for use in future television receivers is yielded, where its performance is certainly superior to that of currently used motion-adaptive temporal filters.

It is noted that JP-A-2/67,688 shows an image noise removing system in which, to prevent the generation of blur, filter characteristics are based on a relation between a central pixel and a weighted averaged pixel in the case of filtering a pixel positioned on the boundary of blocks. A weighted average of a central pixel and eight neighboring pixels surrounding the central pixel is determined. If the difference between the central pixel and the weighted average is smaller than a threshold, the weighted average is supplied, whereas when the difference exceeds the threshold, the unfiltered central pixel is supplied. In contradistinction with the present invention, the prior art weighted average is in no way influenced by the differences between the neighboring pixels and the central pixel. In the prior art, the choice between the weighted average pixel and the unfiltered central pixel is a hard decision, while according to the present invention, for each neighboring pixel a separate decision is taken as to whether and to what extent it participates in the weighted average. The present invention thus offers a far more gradual adaptation to local image characteristics.

Further, DE-C-39.27.101 shows a noise reduction filter in which a delayed luminance signal and an undelayed luminance signal are only averaged if their difference is smaller than a given value. This corresponds to the noise removing system of JP-A-2/67,688 if instead of eight neighboring pixels surrounding the current pixel, only one neighboring pixel above the current pixel would be present. All disadvantages of the system of JP-A-2/67,688 are still present; in fact, the circuit of DE-C-39.27.101 can be considered as a primitive embodiment of the system of JP-A-2/67,688.

The article "Symmetrical recursive median filters; application to noise reduction and edge detection", by Ph. Bolon et al., Signal Processing V: theories and applications, pp. 813-816 shows a recursive median filter for noise reduction. A median filter is a species of the class of order statistic filters. The symmetrical filter described in the article, shows the disadvantage that for two-dimensionally filtering a current input pixel, information from the "future" (*i.e.* pixels below the current pixel when the pixels are scanned from top to bottom) is required, which is unattractive in view of a hardware realisation. In contradistinction therewith, in the embodiment of claim 2 information from horizontal lines other than the line on which the current pixel lies is taken from the output of the delay circuit in the recursive noise reduction circuit.

These and other aspects of the invention will be apparent from and elucidated with reference to the embodiments described hereinafter.

In the drawing:

Figs. 1A and 1B show block diagrams of embodiments of a noise reduction filter in accordance with the present invention; and

Fig. 2 shows a block diagram of a preferred difference-dependent weighted average filter for use in the noise reduction filters of Fig. 1.

The invention concerns non-linear recursive spatial or spatio-temporal filters. Experiments indicate that the filters are attractive for use in future television receivers, as their performance is certainly superior to that of the presently used motion-adaptive temporal recursive filters, while their complexity is practically equivalent. For every pixel position $\underline{p} = (x, y, t)^T$, with T indicating transposition, and input luminance signal $F(\underline{p})$, the proposed filter output $F_F(\underline{p})$ will be defined as:

$$F_F(\underline{p}) = G(\underline{p}) \cdot \left[ F(\underline{p}) + \gamma \cdot \sum_{\underline{n} \in N_1} \alpha(\underline{p}, \underline{n}) \cdot F(\underline{p} + \underline{n}) + \delta \cdot \sum_{\underline{n} \in N_2} \beta(\underline{p}, \underline{n}) \cdot F_F(\underline{p} + \underline{n}) \right] \quad (1)$$

where $N_1$ and $N_2$ are sets of vectors defining one, two, or three-dimensional neighborhoods. The recursivity of the filter results from the third term of equation (1) where the constant $\delta$ controls the amount of recursivity. Further, in accordance with the present invention and in contradistinction to an OSF or a differential OSF, filter weighting coefficients $\alpha(p, \underline{n})$ and $\beta(\underline{p}, \underline{n})$ are related to the absolute difference between the weighted pixel and the current input pixel:

$$\alpha(\underline{p}, \underline{n}) = f_1(|\, F(\underline{p}) - F(\underline{p} + \underline{n})|)$$
$$\beta(\underline{p}, \underline{n}) = f_2(|\, F(\underline{p}) - F_F(\underline{p} + \underline{n})|) \quad (2)$$

with $f_1$ and $f_2$ monotonously decreasing functions. In equation (1), $G$ is a gain or normalization factor:

$$\frac{1}{G(\underline{p})} = 1 + \gamma \cdot \sum_{\underline{n} \in N_1} \alpha(\underline{p}, \underline{n}) + \delta \cdot \sum_{\underline{n} \in N_1} \beta(\underline{p}, \underline{n}) \quad (3)$$

An attractive implementation results if the filter weighting coefficients are selected according to:

$$\alpha(\underline{p}, \underline{n}) = \begin{cases} 1, & (|\, F(\underline{p} + \underline{n}) - F(\underline{p})\,| < Th_1) \\ W, & (Th_1 \leq |\, F(\underline{p} + n) - F(\underline{p})\,| < Th_2) \\ 0, & (|\, F(\underline{p} + \underline{n}) - F(\underline{p})\,| \geq Th_2) \end{cases} \quad (4)$$

and:

$$\beta(\underline{p}, \underline{n}) = \begin{cases} 1, & (|\, F_F(\underline{p} + \underline{n}) - F(\underline{p})\,| < Th_1) \\ W, & (Th_1 \leq |\, F_F(\underline{p} + n) - F(\underline{p})\,| < Th_2) \\ 0, & (|\, F_F(\underline{p} + \underline{n}) - F(\underline{p})\,| \geq Th_2) \end{cases} \quad (5)$$

respectively.

Allowing only spatial recursion (only line memories, no field memories), good results were obtained using the following neighborhoods:

$$N_1 = \left\{ \begin{bmatrix} 1 \\ 0 \\ 0 \end{bmatrix}, \begin{bmatrix} -1 \\ 0 \\ 0 \end{bmatrix} \right\} \qquad (6)$$

and:

$$N_2 = \left\{ \begin{bmatrix} 0 \\ -2 \\ 0 \end{bmatrix}, \begin{bmatrix} 1 \\ -2 \\ 0 \end{bmatrix}, \begin{bmatrix} -1 \\ -2 \\ 0 \end{bmatrix}, \begin{bmatrix} 2 \\ -2 \\ 0 \end{bmatrix}, \begin{bmatrix} -2 \\ -2 \\ 0 \end{bmatrix} \right\} \qquad (7)$$

while selecting $W = 0.25$, $Th_2 = 4.Th_1$, and $\gamma = \delta = 1$, where $Th_1$ was adapted to the noise level. As can be seen from equations (6) and (7), the neighborhoods are selected such that pipe-lining of the algorithm implemented in a very large scale integration (VLSI) is simple.

When allowing for field memories in the design, a three-dimensional noise reduction filter can be realized, for which experimentally good results could be shown, applying the following neighborhoods:

$$N_1 = \left\{ \begin{bmatrix} 1 \\ 0 \\ 0 \end{bmatrix}, \begin{bmatrix} -1 \\ 0 \\ 0 \end{bmatrix} \right\} \qquad (8)$$

and:

$$N_2 = \left\{ \begin{bmatrix} 0+D_x \\ 1+D_y \\ -T \end{bmatrix}, \begin{bmatrix} 0+D_x \\ -1+D_y \\ -T \end{bmatrix}, \begin{bmatrix} 1+D_x \\ 1+D_y \\ -T \end{bmatrix}, \begin{bmatrix} 1+D_x \\ -1+D_y \\ -T \end{bmatrix}, \begin{bmatrix} -1+D_x \\ 1+D_y \\ -T \end{bmatrix}, \begin{bmatrix} -1+D_x \\ -1+D_y \\ -T \end{bmatrix} \right\} \qquad (9)$$

where $\underline{D}(\underline{x}, t) = (D_x, D_y)^T$ is the displacement vector describing the motion between field at time $t$ and the previous field at time $t-T$, while selecting $W = 0.25$, $Th_2 = 4.Th_1$, and $\gamma = \delta = 1$, where $Th_1$ was adapted to the noise level as will be discussed below. In equation (9), $T$ is the field period of the video signal, which equals 20 ms in a 50 Hz environment. Obviously, if no motion vectors are available, $\underline{D}(\underline{x}, t)$ can be taken $\underline{0}$. Again, as can be seen from the equations (9) and (10), the neighborhoods are selected taking implementation aspects, pipe-lining of the algorithm, into account. To obtain both spatial and temporal recursion, the set $N_2$ may be the union of the sets given in the equations (7) and (9).

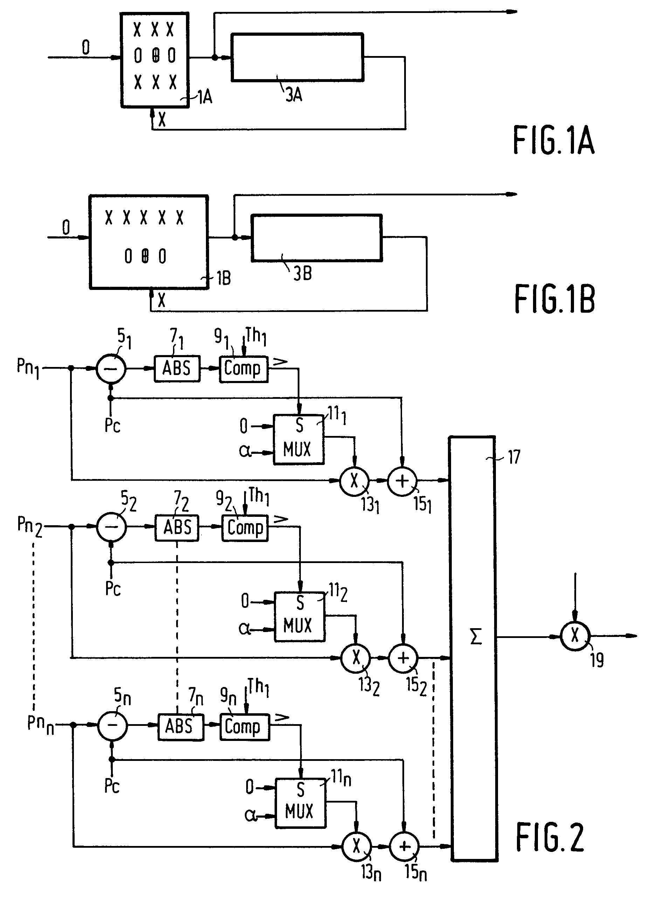

The basic idea of the filter is illustrated in Fig. 1. In the noise reduction filters of Figs. 1A and 1B, the input to the difference-dependent weighted average calculation circuit 1A, 1B includes the current sample ⊕ and several neighboring samples O and X, as in the prior art order statistic filter, but in accordance with the present invention, part of the neighboring samples O and X are previously filtered samples X. In an image processing system, the delay of the delay circuit 3A, 3B in the feedback loop may be a line period (Fig. 1B), a field period or a picture period (Fig. 1A), plus or minus some pixel delays. When the delay is a field or picture period, the feedback loop preferably includes a motion compensation circuit to obtain a better matching of the pixels on which the recursive noise reduction filtering is based. Fig. 1A shows an embodiment of an interfield noise reduction filter in which the delay of the delay circuit 3A is a field or a picture delay, so that the neighboring fed-back pixels X may originate from both above and below the line comprising the current pixel ⊕; the left and right adjacent pixels O are from the same line and field as the current pixel ⊕. Fig. 1B shows an embodiment of an intrafield noise reduction filter in which the delay of the delay circuit 3B is a line delay, so that the neighboring fed-back pixels X originate from the line above the line comprising the current pixel ⊕; the left and right adjacent pixels O are from the same line as the current pixel ⊕.

An attractive implementation of the difference-dependent weighted average calculating circuit is given in Fig. 2. The differences of all pixels in the filter window N1 plus N2 (in Fig. 2 indicated as $Pn_1 \dots Pn_n$) with respect to the current input sample Pc, are calculated by subtracters 5 and absolute value determining circuits 7, and compared with a threshold $Th_1$ by comparators 9. The pixels for which the difference with the current sample is below the threshold $Th_1$, are averaged and the result is applied to the output of the noise reduction filter which is also the input of the delay circuit.

This action is carried out by multiplexers 11 controlled by the comparators 9 to furnish a weighting coefficient 0 when the difference is above the threshold $Th_1$ and to furnish a weighting coefficient $\alpha$ when the difference is below the threshold $Th_1$. Multipliers 13 multiply the neighboring pixels Pn with their respective weighting coefficients. The circuit of Fig. 2 is somewhat simplified with regard to equation (4): those differences between the neighboring pixel values Pn and the current pixel value Pc which are smaller than the threshold $Th_1$ result in a coefficient $\alpha$ for the corresponding neighboring pixel value Pn, while the differences exceeding the threshold value $Th_1$ result in a coefficient 0 for the corresponding neighboring pixel value Pn. The current sample Pc is added to the weighted neighboring pixels Pn by adders 15, whose output signals are summed by an adder 17. The output of the adder 17 is multiplied by a gain coefficient to yield the output signal of the difference-dependent weighted average filter. When $\alpha$ equals 1, a simple average is used; when $\alpha$ differs from 1, a weighted average is used.

Rather than applying binary valued coefficients only, three or four different coefficient values (alpha 1, 2....n) can be applied, where the coefficients with the smallest value are assigned using the highest threshold ($Th_1$, $Th_2$ .....$Th_n$). Further as indicated in equation (2), the weights for previously filtered pixels can be selected different ($\beta$ rather than $\alpha$).

As mentioned hereinbefore, the threshold $Th_1$ (and therefore also $Th_2$, which has a fixed relation to $Th_1$) is preferably adapted to the noise level. A global adaptation (*i.e.* an adaptation for a whole picture) can be thought of and indeed proved useful. Hereinafter, a somewhat more sophisticated option adapting to local image characteristics is described. To this end, the image is divided into non-overlapping blocks $B-(\underline{X})$, where $\underline{X} = (X, Y)^T$ is the center of the block. To each block a value of $Th_1$ is assigned, the calculation of which is based upon the $Th_1$ value in the previous field (temporal recursive adaptation process):

$$Th_1(\underline{X}, t) = Th_1(\underline{X}, t - T) - \Delta(\underline{X}, t) \qquad (10)$$

with:

$$\Delta(\underline{X}, t) = C_1 \cdot \left( \sum_{\underline{x} \in B(\underline{X})} | F_F(\underline{X} + \underline{x}, t-T) - F(\underline{X} + \underline{x}, t-T) | - MinMad(t) \right) \qquad (11)$$

where *MinMad* is an estimated value of the noise level in the field, and $C_1$ is a constant. A possible simplification is to use a sign function according to:

$$\Delta(\underline{X}, t) = C_1 \cdot \text{SIGN}\left( \sum_{\underline{x} \in B(\underline{X})} | F_F(\underline{X} + \underline{x}, t-T) - F(\underline{X} + \underline{x}, t-T) | - MinMad(t) \right) \qquad (12)$$

where SIGN($\alpha$) is defined according to:

$$SIGN(a) = \begin{cases} -1, & (a < 0) \\ +1, & (a \geq 0) \end{cases} \qquad (13)$$

Experiments showed that $MinMad(t)$ is preferably equal to the minimum in a field at time $t$ of the motion-compensated summed absolute difference over a block of two successive fields:

$$MinMad(t) = \underset{\forall \underline{X} \in Field}{Min} \sum_{\underline{x} \in B(\underline{X})} | F(\underline{x}, t) - F(\underline{x} - \underline{D}(\underline{X}, t), t - T) | \qquad (14)$$

where $\underline{D}(\underline{X}, t)$ is the displacement vector found with a motion estimator for the block $B(\underline{X})$ at time $t$. The philosophy behind this choice is that $MinMad(t)$ thus reflects the noise in the picture assuming that the estimator at least at one block of the image is converged completely.

In an attractive implementation, the motion estimator and the noise reduction circuit would share the picture memories, which is possible because the sum in equation (14) corresponds to the match error of the motion estimator. In this situation, however, the measured $MinMad(t)$ corresponds to the reduced noise level, which is preferably corrected for the amount of filtering applied. Experimentally, it was verified that the following correction, the result of which is called $ModMad(t)$, yields satisfactory results:

$$ModMad(t) = ModMad(t - T) + Mod(t) \qquad (15)$$

where $Mod(t)$ is found according to:

$$Mod(t) = C_2 \cdot \left[ \frac{MinMad(t)}{C_3 \cdot \sum_{\underline{x} \in B(\underline{X})} G(\underline{x}, t)} - ModMad(t - T) \right] \qquad (16)$$

where $B(\underline{X})$ is the block where $MinMad(t)$ was found, while $C_2$ and $C_3$ again are experimentally optimized constants. The first time $ModMad(t)$ is calculated, $Modmad(t-T)$ is assumed to be zero.

Rather than adapting $Th_1$ per block in the picture, or additional to it, local adaptation of $\gamma$ and $\delta$ in equation (1) can be considered.

It should be noted that the above-mentioned embodiments illustrate rather than limit the invention, and that those skilled in the art will be able to design many alternative embodiments without departing from the scope of the appended claims.

As an alternative to the use of the recursive noise reduction filter of Fig. 2 using all neighboring samples which differ by less than a (noise adapted) threshold from the current pixel value, it is possible to average the n least differing (compared to the current pixel) pixel values, in which case n depends on the noise level.

In a television signal receiver having a luminance noise reduction filter and a chrominance noise reduction filter, filter coefficients of the chrominance noise reduction filter are preferably dependent on differences between neighboring luminance pixel values. This yields as an unexpected advantage that cross-color is reduced. This effect can be explained as follows. Suppose an *e.g.* horizontal high-frequency luminance pattern. The horizontal high-frequency luminance pattern will cause an undesired cross-color having vertical components. To avoid that the horizontal high-frequency information will be damaged by the noise reduction filtering, the noise reduction filtering will be predominantly vertically oriented. Such a vertically oriented noise reduction filtering will not only filter the vertical noise components, but also the vertical cross-color components and thus reduce the cross-color.

A further improvement is obtained when instead of directly neighboring input pixels, pixels at some horizontal and/or vertical distance are used. It appeared that thereby, low-frequency noise components were reduced in addition to the high-frequency noise components which can also be reduced when directly neighboring input pixels are used. In one preferred embodiment, the recursive noise reduction filter receives 5 filtered pixels from the previous line having a distance of 4 pixels between two successive input pixels, 3 unfiltered pixels from the present line having a distance of 2 pixels between two successive input pixels. *I.e.*, instead of the neighborhoods $N_1$ and $N_2$ indicated in the formulae (6) and (7), the following neighborhoods are used:

$$N_1 = \left\{ \begin{bmatrix} 2 \\ 0 \\ 0 \end{bmatrix}, \begin{bmatrix} -2 \\ 0 \\ 0 \end{bmatrix} \right\} \tag{17}$$

and:

$$N_2 = \left\{ \begin{bmatrix} 0 \\ -2 \\ 0 \end{bmatrix}, \begin{bmatrix} 4 \\ -2 \\ 0 \end{bmatrix}, \begin{bmatrix} -4 \\ -2 \\ 0 \end{bmatrix}, \begin{bmatrix} 8 \\ -2 \\ 0 \end{bmatrix}, \begin{bmatrix} -8 \\ -2 \\ 0 \end{bmatrix} \right\} \tag{18}$$

A ringing effect occurring at edges appeared to be reduced when the filtered input samples from the previous line (neighborhood $N_2$) were taken from positions shifted in the horizontal direction line-alternatingly by + 1, 0, -1, 0, + 1, ... pixels. Many variations in the inter-pixel distance, the number of pixels used, and the magnitude of the line-alternating shift in the position of the filtered input pixels taken from the previous line are possible. In one embodiment, the inter-pixel distance depends on an edge-detection such that the inter-pixel distance decreases with an increasing difference between a current pixel and one of the neighboring pixels (e.g. the neighboring pixel having the largest distance to the current pixel). The inter-pixel distance may vary separately for left and right neighboring pixels.

Thus, in accordance with the present invention, a family of non-linear filters is proposed, which experimentally shows a particularly good suitability for noise reduction application in image data processing. It concerns a class of recursive spatial and spatio-temporal filters, for which options are given to adapt to noise level and local image characteristics. In the noise reduction filters in accordance with the present invention, weights are related to the absolute difference between samples. It is shown that particularly multi-dimensional recursive variants of this nonlinear filter family are attractive for noise reduction of images. The recursivity can be designed to facilitate implementation at high processing speed, *i.e.* the definition of the noise reduction filter allows for pipe-lining. In case of temporal recursion, motion-compensation turns out to increase the performance. An attractive implementation of the weight calculation circuit is provided, and methods are indicated to adapt the filter to the noise level in the picture and to the local characteristics of the picture.

## Claims

1. A noise reduction filter comprising:

   delay means (3) for furnishing a plurality of delayed signal samples (X);

   a weighted average filter (1) coupled to receive a plurality of input signal samples (O,⊕) and said delayed signal samples (X) to furnish noise-reduced signal samples to said delay means (3), and wherein

   weighting coefficients assigned to samples ($Pn_1..Pn_n$) of said input signal (O) and said delayed signal (X) depend on respective differences between a current sample (⊕,Pc) of said input signal on the one hand and said samples ($Pn_1..Pn_n$) of said input signal (O) and said delayed signal (X) on the other hand.

2. A noise reduction filter as claimed in claim 1, wherein said plurality of input samples (O,⊕) are all on a first horizontal line of an image signal, while said delayed signal samples (X) are all on one or more lines other than said first horizontal line.

3. A noise reduction filter as claimed in claim 1, wherein a first weighting coefficient is assigned to samples ($Pn_1..Pn_n$) of said input signal (O) and said delayed signal (X) differing by less than a threshold value from said current sample ($\oplus$,Pc) of said input signal, while weighting coefficients differing from said first weighting coefficient are assigned to samples ($Pn_1..Pn_n$) of said input signal (O) and said delayed signal (X) differing by more than said threshold value from said current sample ($\oplus$,Pc) of said input signal.

4. A noise reduction filter as claimed in claim 3, wherein a second weighting coefficient smaller than said first weighting coefficient is assigned to those samples ($Pn_1..Pn_n$) which differ from the current sample ($\oplus$,Pc) by more than said first-mentioned threshold value and by less than a second threshold value, which second threshold value is larger than said first threshold value.

5. A noise reduction filter as claimed in claim 1, wherein said delay means (3) comprise motion vector compensation means.

6. A noise reduction filter as claimed in claim 3, wherein said threshold value depends on the noise level.

7. A noise reduction filter as claimed in claim 3, wherein said threshold value depends on a minimum in a field of a motion-compensated difference between two successive fields.

8. A noise reduction filter as claimed in claim 1, wherein weighting coefficients for a chrominance signal noise reduction filtering depend on differences between neighboring luminance sample values.

9. A noise reduction filter as claimed in claim 1, wherein said samples ($Pn_1..Pn_n$) applied to said weighting average filter (1) are not-directly neighboring samples.

10. A noise reduction filter as claimed in claim 9, wherein a distance between said not-directly neighboring samples depends on an edge-detection such that said distance decreases with an increasing difference between a current sample ($\oplus$,Pc) and one of said not-directly neighboring samples.

11. A noise reduction filter as claimed in claim 1, wherein said delayed samples (X) from a previous line are taken from positions line-alternatingly shifted in the horizontal direction.

12. An image signal receiver comprising a signal input for receiving an image signal, a signal processor for processing said image signal, and a display unit for displaying the processed image signal, wherein said signal processor comprises a noise reduction filter as claimed in any of the preceding claims.

13. A noise reduction filtering method comprising the steps of:
  furnishing (3) a plurality of delayed signal samples (X);
  assigning weighting coefficients to samples ($Pn_1..Pn_n$) of an input signal (O) and said delayed signal (X) in dependence on respective differences between a current sample ($\oplus$,Pc) of said input signal on the one hand and said samples ($Pn_1..Pn_n$) of said input signal (O) and said delayed signal (X) on the other hand; and
  weighted average filtering (1) a plurality of said input signal samples (O,$\oplus$) and said delayed signal samples (X) by means of said weighting coefficients to furnish noise-reduced signal samples to said delayed signal samples (X) furnishing step (3).

FIG.1A

FIG.1B

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-A-4 573 070 (COOPER J.) | 1-3,6,13 | H04N5/21 |
| Y | * column 4, line 35 - line 66 * <br> * column 6, line 23 - column 10, line 67 * <br> --- | 5,8 | H04N9/64 |
| Y | FR-A-2 624 680 (THOMSON GRAND PUBLIC) <br> * the whole document * <br> --- | 5 | |
| Y | EP-A-0 344 579 (SIEMENS AKTIENGESELLSCHAFT) <br> * column 4, line 11 - column 5, line 46 * <br> --- | 8 | |
| A | EP-A-0 196 193 (RCA CORPORATION) <br> * page 19, line 1 - line 9 * <br> --- | 1,13 | |
| A | US-A-4 658 285 (LEWIS H.) <br> * column 2, line 16 - column 3, line 60 * <br> --- | 1,8 | |
| A | US-A-4 296 436 (ACHIHA M.) <br> * the whole document * <br> --- | 1,13 | |
| A | GB-A-2 173 066 (RCA CORPORATION) <br> * the whole document * <br> ----- | 1,12,13 | TECHNICAL FIELDS SEARCHED (Int.Cl.5) <br><br> H04N |

The present search report has been drawn up for all claims

| Place of search | Date of completion of the search | Examiner |
|---|---|---|
| THE HAGUE | 25 March 1994 | Verschelden, J |